# EUROPÄISCHE PATENTANMELDUNG

(11) **EP 4 841 373 A1**
(43) Veröffentlichungstag der Anmeldung: **18.11.2026**
(21) Anmeldenummer: 26177467.3
(22) Anmeldetag: 08.05.2026
(51) Int. Cl.: G05B 19/409, G05B 19/408

(54) **ANORDNUNG UMFASSEND EIN CNC-BEARBEITUNGSZENTRUM**

(30) Priorität: 13.05.2025 AT 5004625 U
(71) Anmelder: Felder KG, 6060 Hall (AT)
(72) Erfinder: FELDER, Johann, 6060 Hall in Tirol (AT)
(74) Vertreter: Torggler & Hofmann Patentanwälte - Innsbruck

(57) **Zusammenfassung**

Anordnung umfassend ein CNC-Bearbeitungszentrum (1) zum Bearbeiten eines Werkstücks (2), eine durch einen Benutzer tragbare Anzeigevorrichtung, wobei die durch einen Benutzer tragbare Anzeigevorrichtung als Extended-Reality-Anzeigevorrichtung (5) ausgebildet ist, wobei die Anordnung weiter eine Bilderfassungseinrichtung (8), die in Echtzeit Bilddaten (7) einer realen Umgebung des CNC-Bearbeitungszentrums (1) erfasst, und eine zum Erstellen von Extended-Reality-Inhalten konfigurierte Recheneinheit (15) umfasst, wobei die zum Erstellen von Extended-Reality-Inhalten konfigurierte Recheneinheit (15) auf das CNC-Bearbeitungszentrum (1) bezogene virtuelle Inhalte (6) erstellt und in ein Extended-Reality-kompatibles Format überführt, wobei die zum Erstellen von Extended-Reality-Inhalten konfigurierte Recheneinheit (15) die von der Bilderfassungseinrichtung (8) erfassten Bilddaten (7) verarbeitet und in ein Extended-Reality-kompatibles Format überführt, wobei die Extended-Reality-Anzeigevorrichtung (5) sowohl die auf das CNC-Bearbeitungszentrum (1) bezogenen virtuellen Inhalte (6), als auch die verarbeiteten Bilddaten (7) der realen Umgebung des CNC-Bearbeitungszentrums (1) anzeigt.

## Beschreibung

Die Erfindung betrifft eine Anordnung mit zumindest einem CNC-Bearbeitungszentrum und zumindest einer durch einen Benutzer tragbaren Anzeigevorrichtung, ein Verfahren zur Anzeige von auf zumindest ein CNC-Bearbeitungszentrum bezogenen Extended-Reality-Inhalten durch eine Extended-Reality-Anzeigevorrichtung, und die Verwendung einer am Körper eines Nutzers tragbaren Extended-Reality-Anzeigevorrichtung in einer solchen Anordnung zur Durchführung eines solchen Verfahrens.

Im Stand der Technik sind Anordnungen mit zumindest einem CNC-Bearbeitungszentrum und zumindest einer durch einen Benutzer tragbaren Anzeigevorrichtung bekannt. Durch solche Anzeigevorrichtungen können einem Benutzer Daten zu einem CNC-Bearbeitungszentrum angezeigt werden.

Nachteilig an im Stand der Technik bekannten Anordnungen solcher Art ist die statische, fest vorgegebene, nicht-dynamische Anzeige von Daten. Auch ist einem Benutzer gewöhnlich keine Möglichkeit zur Interaktion mit den angezeigten Inhalten gegeben. Ein Zusammenhang mit den angezeigten Daten und dem CNC-Bearbeitungszentrum oder dem Teil des CNC-Bearbeitungszentrums, auf welches oder welchen die Daten bezogen sind, ist oftmals nicht intuitiv erkennbar.

Aufgabe der Erfindung ist die Bereitstellung einer Anordnung, bei welcher diese Nachteile nicht auftreten. Bevorzugt soll eine dynamische Anzeige von Daten ermöglicht werden. Auch soll bevorzugt einem Benutzer die Möglichkeit zur Interaktion mit den angezeigten Inhalten gegeben werden. Ein Zusammenhang mit den angezeigten Daten und dem CNC-Bearbeitungszentrum oder dem Teil des CNC-Bearbeitungszentrums, auf welches oder welchen die Daten bezogen sind, soll bevorzugt intuitiv erkennbar sein.

Diese Aufgabe wird durch eine Anordnung mit zumindest einem CNC-Bearbeitungszentrum und zumindest einer durch einen Benutzer tragbaren Anzeigevorrichtung gemäß Anspruch 1, durch ein Verfahren zur Anzeige von auf zumindest ein CNC-Bearbeitungszentrum bezogenen Extended-Reality-Inhalten durch eine Extended-Reality-Anzeigevorrichtung gemäß Anspruch 8, und die Verwendung einer am Körper eines Nutzers tragbaren Extended-Reality-Anzeigevorrichtung in einer solchen Anordnung zur Durchführung eines solchen Verfahrens gelöst. Vorteilhafte Ausführungsformen der Anordnung und des Verfahrens sind in den abhängigen Ansprüchen definiert.

Es ist vorgesehen, dass die Anordnung zumindest ein CNC-Bearbeitungszentrum zum, insbesondere spanabhebenden, Bearbeiten wenigstens eines, insbesondere plattenförmigen, Werkstücks, insbesondere aus Holz oder aus wenigstens einem Holzaustauschstoff, umfasst.

Unter einem CNC-Bearbeitungszentrum kann eine rechnergesteuerte Werkzeugmaschine verstanden werden, mit welcher eine geführte Bewegung eines Bearbeitungswerkzeugs zumindest teilweise automatisch durchgeführt werden kann.

Eine geführte Bewegung eines entsprechenden Bearbeitungswerkzeugs kann Bearbeitungsvorgänge, wie etwa Fräsen, Bohren oder Sägen umfassen. Ein solches CNC-Bearbeitungszentrum kann beispielsweise als Portalfräse ausgebildet sein. Eine Steuerung des CNC-Bearbeitungszentrums kann über eine rechnergestützte Steuereinrichtung erfolgen.

Das CNC-Bearbeitungszentrum kann eine Werkstückauflage zur Platzierung und zum Festhalten des zu bearbeitenden Werkstücks aufweisen. Das wenigstens eine Werkstück kann auf die wenigstens eine Werkstückauflage positioniert und von dieser festgehalten werden.

Auf der wenigstens einen Werkstückauflage kann alternativ oder zusätzlich zumindest ein Spannmittel positioniert werden, welches auch zum Festhalten des wenigstens einen Werkstücks dienen kann. Ein Positionieren des Spannmittels kann zumindest teilweise manuell durch einen Nutzer erfolgen. Das wenigstens eine Spannmittel kann direkt auf die Werkstückauflage positioniert werden und/oder auf bewegbaren Trägern, wie etwa entlang der Werkstückauflage verschiebbaren Balken oder Konsolen, anordenbar sein.

Die Anordnung weist weiter zumindest eine durch einen Benutzer tragbare Anzeigevorrichtung auf. Es ist vorgesehen, dass die zumindest eine durch einen Benutzer tragbare Anzeigevorrichtung als Extended-Reality-Anzeigevorrichtung ausgebildet ist.

Die zumindest eine Extended-Reality-Anzeigevorrichtung kann vorteilhaft als Virtual-Reality-Anzeigevorrichtung, und/oder Augmented-Reality-Anzeigevorrichtung, und/oder als Mixed-Reality-Anzeigevorrichtung ausgebildet sein.

Ein Benutzer kann sich mit der Extended-Reality-Anzeigevorrichtung im Wesentlichen frei im Umfeld eines oder mehrerer CNC-Bearbeitungszentren bewegen.

Unter einer Extended-Reality-Anzeigevorrichtung kann grundsätzlich eine Vorrichtung verstanden werden, mit welcher eine computergestützte Erweiterung der Realitätswahrnehmung erreicht werden kann. Bei einer Extended-Reality-Anzeigevorrichtung kann einem Benutzer eine auf einem realen Bild basierte Umgebung mit digitalen Informationen/Daten angereichert dargestellt werden.

Von einem Nutzer können beispielsweise mit dessen Augen ein reales Bild, ein Kamerabild einer realen Umgebung oder ein virtuelles Abbild einer Umgebung wahrgenommen werden und von der Extended-Reality-Anzeigevorrichtung in dessen Sichtfeld zusätzliche virtuelle Informationen/Daten eingeblendet werden.

Die Anordnung umfasst weiter zumindest eine Bilderfassungseinrichtung, die in Echtzeit Bilddaten einer realen Umgebung des zumindest einen CNC-Bearbeitungszentrums erfasst, und zumindest eine zum Erstellen von Extended-Reality-Inhalten konfigurierte Recheneinheit.

Die zumindest eine zum Erstellen von Extended-Reality-Inhalten konfigurierte Recheneinheit kann mit einer Speichereinheit in einer Datenverbindung stehen oder in eine solche bringbar sein.

Zumindest eine Bilderfassungseinrichtung kann als eine Kamera ausgebildet sein, die in Echtzeit Bilddaten einer realen Umgebung des zumindest einen CNC-Bearbeitungszentrums erfasst. Die Bilddaten können einem Sichtfeld des Benutzers, welcher die zumindest eine Extended-Reality-Anzeigevorrichtung trägt, entsprechen.

Die Bilderfassungseinrichtung, oder zumindest eine weitere Bilderfassungseinrichtung, kann in Echtzeit Bilddaten einer realen Umgebung des zumindest einen CNC-Bearbeitungszentrums erfassen, wobei Bilddaten einem Bereich außerhalb eines Sichtfelds des Benutzers, welcher die zumindest eine Extended-Reality-Anzeigevorrichtung trägt, entsprechen können. Ein solcher Bereich kann beispielsweise einen durch einen Benutzer nicht unmittelbar einsehbaren Bereich umfassen.

Vorteilhaft umfasst die Anordnung eine Steuereinrichtung zur Steuerung von Maschinenfunktionen des zumindest einen CNC-Bearbeitungszentrums mit Steuerbefehlen, wobei diese Steuereinrichtung wenigstens eine Recheneinheit und wenigstens eine Speichereinheit aufweisen kann oder mit einer Recheneinheit und wenigstens einer Speichereinheit in Datenverbindung stehen kann. Die Recheneinheit kann mit der Speichereinheit in einer Datenverbindung stehen oder in eine solche bringbar sein, wobei die Steuereinrichtung eine Kommunikationseinrichtung zur drahtlosen und/oder kabelgebundenen Kommunikation mit dem CNC-Bearbeitungszentrum, und/oder der zum Erstellen von Extended-Reality-Inhalten konfigurierten Recheneinheit, und/oder der Extended-Reality-Anzeigevorrichtung aufweisen kann.

Die wenigstens eine Extended-Reality-Anzeigevorrichtung kann eine Recheneinheit und eine mit dieser in einer Datenverbindung stehende oder in eine solche bringbare Speichereinheit aufweisen.

Die zumindest eine zum Erstellen von Extended-Reality-Inhalten konfigurierte Recheneinheit kann als ein gesonderter Rechner ausgeführt sein, als eine Recheneinheit des CNC-Bearbeitungszentrums ausgeführt sein, oder als eine Recheneinheit der Extended-Reality-Anzeigevorrichtung ausgeführt sein.

Die wenigstens eine Extended-Reality-Anzeigevorrichtung kann eine Kommunikationseinrichtung zur drahtlosen und/oder kabelgebundenen Kommunikation mit dem CNC-Bearbeitungszentrum und/oder dem Rechner aufweisen. Das zumindest eine CNC-Bearbeitungszentrum kann eine Kommunikationseinrichtung zur drahtlosen und/oder kabelgebundenen Kommunikation mit der Extended-Reality-Anzeigevorrichtung und/oder dem Rechner aufweisen.

Die zumindest eine zum Erstellen von Extended-Reality-Inhalten konfigurierte Recheneinheit erstellt auf das zumindest eine CNC-Bearbeitungszentrum bezogene virtuelle Inhalte und führt diese in ein Extended-Reality-kompatibles Format über.

Die zumindest eine zum Erstellen von Extended-Reality-Inhalten konfigurierte Recheneinheit verarbeitet die von der zumindest einen Bilderfassungseinrichtung erfassten Bilddaten und führt diese in ein Extended-Reality-kompatibles Format über.

Es ist vorgesehen, dass die Extended-Reality-Anzeigevorrichtung sowohl die auf das zumindest eine CNC-Bearbeitungszentrum bezogenen virtuellen Inhalte, als auch die verarbeiteten Bilddaten der realen Umgebung des zumindest einen CNC-Bearbeitungszentrums anzeigt.

Als auf das zumindest eine CNC-Bearbeitungszentrum bezogene virtuelle Inhalte können grundsätzlich sämtliche Inhalte verstanden werden, die zusätzlich zu von einer Bilderfassungseinrichtung erfassten Bilddaten gegeben sind.

Zur Lageerfassung der Extended-Reality-Anzeigevorrichtung im Raum kann die Anordnung, insbesondere die Extended-Reality-Anzeigevorrichtung, eine Sensoreinheit mit mindestens einem inertialen Messelement zur Erfassung von Beschleunigungs- und/oder Rotationsdaten der Extended-Reality-Anzeigevorrichtung aufweisen.

Alternativ oder in Kombination kann die Anordnung, insbesondere die Extended-Reality-Anzeigevorrichtung, eine optische Erfassungseinheit zum Erfassen einer Position von vorgebbaren oder vorgegebenen Positionsmarkern und/oder Umgebungsmerkmalen einer realen Umgebung des zumindest einen CNC-Bearbeitungszentrums aufweisen. Vorgebbare oder vorgegebene Positionsmarker können beispielsweise an bekannten Positionen des CNC-Bearbeitungszentrums angeordnet sein. Die optische Erfassungseinheit kann vorzugsweise durch die zumindest eine Bilderfassungseinrichtung ausgebildet sein.

Erfasste Beschleunigungs- und/oder Rotationsdaten, sowie erfasste Positionen von vorgebbaren oder vorgegebenen Positionsmarkern und/oder erfasste Umgebungsmerkmale können von einer Recheneinheit verarbeitet werden, um daraus eine dreidimensionale Position und Orientierung der Extended-Reality-Anzeigevorrichtung im Raum und insbesondere relativ zu dem zumindest einen CNC-Bearbeitungszentrum zu bestimmen.

Die auf das zumindest eine CNC-Bearbeitungszentrum bezogenen virtuellen Inhalte, als auch die verarbeiteten Bilddaten der realen Umgebung des zumindest einen CNC-Bearbeitungszentrums können in Abhängigkeit der bestimmten Position und Orientierung der Extended-Reality-Anzeigevorrichtung im Raum anzeigbar sein.

In einer vorteilhaften Ausführung können mit der zumindest einen Bilderfassungseinrichtung Bilddaten zu von einem Benutzer durchgeführten Bewegungen erfassbar sein. Beispielsweise können mit den Händen ausgeführte Gesten eines Benutzers erfassbar sein. Solche Gesten können relativ zu Baugruppen des zumindest einen CNC-Bearbeitungszentrums und/oder relativ zu angezeigten Extended-Reality-Inhalten ausgeführt werden.

Die zumindest eine zum Erstellen von Extended-Reality-Inhalten konfigurierte Recheneinheit kann zur Erkennung von Benutzerbewegungen als Bedienbefehle zur Erstellung von Extended-Reality-Inhalten konfiguriert sein. Ein Benutzer kann so Einfluss auf die zu erstellenden und anzuzeigenden Extended-Reality-Inhalte nehmen. Beispielsweise kann damit eine Anzeige von Extended-Reality-Inhalten zu einem bestimmten CNC-Bearbeitungszentrum oder zu bestimmten Betriebsparametern eines CNC-Bearbeitungszentrums auswählbar sein.

Alternativ oder in Kombination kann die zumindest eine zum Erstellen von Extended-Reality-Inhalten konfigurierte Recheneinheit zur Erkennung von Benutzerbewegungen als Steuerbefehle zur Steuerung von Maschinenfunktionen des zumindest einen CNC-Bearbeitungszentrums in den Bilddaten konfiguriert sein.

In einer vorteilhaften Ausführung können die auf das CNC-Bearbeitungszentrum bezogenen virtuellen Inhalte zumindest eine virtuelle Benutzerschnittstelle mit zumindest einem virtuellen Bedienelement zur Steuerung von Maschinenfunktionen des zumindest einen CNC-Bearbeitungszentrums umfassen. Eine solche virtuelle Benutzerschnittstelle kann einem Benutzer beispielsweise eine menügeführte Auflistung von steuerbaren Maschinenfunktionen vermitteln, wobei eine Interaktion mit der Benutzerschnittstelle über zumindest ein virtuelles Bedienelement erfolgen kann. Eine Interaktion mit einem solchen virtuellen Bedienelement kann beispielsweise über ein physisches Eingabegerät und/oder über eine wie zuvor beschriebene Gestensteuerung erfolgen.

Alternativ oder in Kombination können in einer vorteilhaften Ausführung die auf das CNC-Bearbeitungszentrum bezogenen virtuellen Inhalte eine virtuelle Darstellung von Betriebsparametern des zumindest einen CNC-Bearbeitungszentrums umfassen. Die Betriebsparameter können sich beispielsweise auf Maschinenfunktionen und/oder den Bearbeitungsfortschritt des Werkstücks beziehen.

Alternativ oder in Kombination können in einer vorteilhaften Ausführung die auf das CNC-Bearbeitungszentrum bezogenen virtuellen Inhalte eine virtuelle Darstellung von Hilfestellungen zur Bedienung des zumindest einen CNC-Bearbeitungszentrums umfassen.

Eine solche virtuelle Darstellung kann Hilfestellungen zur Reparatur und/oder Wartung von Baugruppen des zumindest einen CNC-Bearbeitungszentrums umfassen, wie etwa digitale Anleitungen oder schematische Darstellungen. Insbesondere kann einem Benutzer eine virtuelle Darstellung zur Manipulation eines Bauteils einer Baugruppe des zumindest einen CNC-Bearbeitungszentrums angezeigt werden. Es ist auch denkbar, dass einem Benutzer eine Fernunterstützung zur Reparatur und/oder Wartung dargestellt wird.

In einer vorteilhaften Ausführung können von der zumindest einen Bilderfassungseinrichtung Bilddaten optoelektronisch lesbarer Codes, insbesondere QR-Codes, erfasst werden. Die zumindest eine zum Erstellen von Extended-Reality-Inhalten konfigurierte Recheneinheit kann zum Dekodieren der in den Bilddaten enthaltenen codierten Daten konfiguriert sein. Auf die dekodierten Daten bezogene virtuelle Inhalte können erstellt und zur Anzeige durch die Extended-Reality-Anzeigevorrichtung in ein Extended-Reality-kompatibles Format überführt werden. Ein Erstellen der auf die dekodierten Daten bezogenen virtuellen Inhalte kann beispielweise aus einem Speicher ausgelesene Daten und/oder netzwerkbasiert bereitgestellte Daten einbeziehen.

In einer vorteilhaften Ausführung können mit der zumindest einen Bilderfassungseinrichtung Bilddaten einer Anordnung und Konfiguration von funktional miteinander verbundener Baugruppen des zumindest einen CNC-Bearbeitungszentrums erfassbar sein. Funktional miteinander verbundene Baugruppen können Bearbeitungswerkzeuge, und/oder Spannmittel, und/oder Werkstückauflagen des zumindest einen CNC-Bearbeitungszentrums umfassen.

Die zumindest eine zum Erstellen von Extended-Reality-Inhalten konfigurierte Recheneinheit kann zur Erkennung von Abweichungen von einer Soll-Anordnung und/oder einer Soll-Konfiguration der funktional miteinander verbundenen Baugruppen konfiguriert sein, wobei die zumindest eine zum Erstellen von Extended-Reality-Inhalten konfigurierte Recheneinheit auf die Soll-Anordnung und/oder die Soll-Konfiguration der funktional miteinander verbundenen Baugruppen bezogene virtuelle Inhalte erstellen und zur Anzeige durch die die Extended-Reality-Anzeigevorrichtung in ein Extended-Reality-kompatibles Format überführen kann. Eine Anzeige kann gemeinsam mit den verarbeiteten Bilddaten der realen Umgebung des zumindest einen CNC-Bearbeitungszentrums erfolgen.

Solche Extended-Reality-Inhalte können Hilfestellungen zur Positionierung von Spannmitteln zumindest eines CNC-Bearbeitungszentrums an den Sollpositionen umfassen. Es können auch Informationen zu der Sollposition des Werkstücks vorgesehen sein. Dabei können Bilddaten wenigstens eines Spannmittels, und/oder wenigstens einer Werkstückauflage, und/oder des Werkstücks, gemeinsam mit virtuellen Extended-Reality-Inhalten mit Informationen zum Grad einer Überdeckung einer jeweiligen Ist-Position mit der jeweiligen Sollposition angezeigt werden.

In einer vorteilhaften Ausführung können mit der zumindest einen Bilderfassungseinrichtung Bilddaten einer Lagervorrichtung für Bearbeitungswerkzeuge, oft als Werkzeugmagazin bezeichnet, des zumindest einen CNC-Bearbeitungszentrums erfassbar sein. Die zumindest eine zum Erstellen von Extended-Reality-Inhalten konfigurierte Recheneinheit kann zur Erkennung von Abweichungen von einer vorgegebenen oder vorgebbaren Soll-Bestückung der Lagervorrichtung mit Bearbeitungswerkzeugen konfiguriert sein, wobei die zumindest eine zum Erstellen von Extended-Reality-Inhalten konfigurierte Recheneinheit auf die Soll-Bestückung der Lagervorrichtung mit Bearbeitungswerkzeugen bezogene virtuelle Inhalte erstellen und diese zur Anzeige durch die die Extended-Reality-Anzeigevorrichtung in ein Extended-Reality-kompatibles Format überführen kann. Eine Anzeige kann gemeinsam mit den verarbeiteten Bilddaten der realen Umgebung des zumindest einen CNC-Bearbeitungszentrums erfolgen. Einem Benutzer kann so eine Hilfestellung zur Bestückung eines Werkzeugmagazins für einen geplanten Bearbeitungsprozess eines Werkstücks gegeben werden.

In einer vorteilhaften Ausführung können der zumindest einen zum Erstellen von Extended-Reality-Inhalten konfigurierte Recheneinheit Daten zu auszuführenden Bearbeitungsabläufen des zumindest einen CNC-Bearbeitungszentrums zuführbar sein. Die zumindest eine zum Erstellen von Extended-Reality-Inhalten konfigurierte Recheneinheit kann auf die auszuführenden Bearbeitungsabläufe bezogene virtuelle Inhalte erstellen und diese zur Anzeige durch die die Extended-Reality-Anzeigevorrichtung in ein Extended-Reality-kompatibles Format überführen. Eine Anzeige kann gemeinsam mit den verarbeiteten Bilddaten der realen Umgebung des zumindest einen CNC-Bearbeitungszentrums erfolgen. Solche Extended-Reality-Inhalte können Informationen zu wenigstens einer Soll-Bearbeitungskontur auf dem wenigstens einen Werkstück umfassen. Dies kann beispielsweise durch eine virtuelle Darstellung eines Pfades eines Bearbeitungswerkzeugs des CNC-Bearbeitungszentrums erfolgen. Dadurch können sich Bearbeitungsabläufe virtuell simulieren lassen und eine Kollision eines Bearbeitungswerkzeugs mit einem Teil des CNC-Bearbeitungszentrums, etwa einem Spannmittel, oder dem Werkstück ausgeschlossen werden.

Die zumindest eine zum Erstellen von Extended-Reality-Inhalten konfigurierte Recheneinheit kann zum Erkennen von Kollisionen funktional miteinander verbundener Baugruppen des zumindest einen CNC-Bearbeitungszentrums auf Basis der Daten zu auszuführenden Bearbeitungsabläufen konfiguriert sein. Insbesondere kann die zumindest eine zum Erstellen von Extended-Reality-Inhalten konfigurierte Recheneinheit zum Erkennen von Kollisionen von Bearbeitungswerkzeugen mit einem Teil des CNC-Bearbeitungszentrums, etwa einem Spannmittel, oder dem Werkstück ausgebildet sein. Die zumindest eine zum Erstellen von Extended-Reality-Inhalten konfigurierte Recheneinheit kann dazu konfiguriert sein, auf erkannte Kollisionen bezogene virtuelle Inhalte zu erstellen und diese zur Anzeige durch die die Extended-Reality-Anzeigevorrichtung in ein Extended-Reality-kompatibles Format überzuführen.

Schutz wird auch begehrt für ein Verfahren zur Anzeige von auf zumindest ein CNC-Bearbeitungszentrum bezogenen von Extended-Reality-Inhalten durch eine Extended-Reality-Anzeigevorrichtung.

Dabei erfasst zunächst zumindest eine Bilderfassungseinrichtung in Echtzeit Bilddaten einer realen Umgebung des zumindest einen CNC-Bearbeitungszentrums.

Eine zum Erstellen von Extended-Reality-Inhalten konfigurierte Recheneinheit verarbeitet die von der zumindest einen Bilderfassungseinrichtung erfassten Bilddaten und führt diese in ein Extended-Reality-kompatibles Format über.

Zumindest eine zum Erstellen von Extended-Reality-Inhalten konfigurierte Recheneinheit erstellt auf das zumindest eine CNC-Bearbeitungszentrum bezogene virtuelle Inhalte und führt diese in ein Extended-Reality-kompatibles Format über.

Die zumindest eine Extended-Reality-Anzeigevorrichtung zeigt sowohl die auf das zumindest eine CNC-Bearbeitungszentrum bezogenen virtuellen Inhalte, als auch die verarbeiteten Bilddaten der realen Umgebung des zumindest einen CNC-Bearbeitungszentrums an.

In einer vorteilhaften Ausführung des Verfahrens zeigt die Extended-Reality-Anzeigevorrichtung auf das zumindest eine CNC-Bearbeitungszentrum bezogenen virtuellen Inhalte in Form
- zumindest einer virtuellen Benutzerschnittstelle mit zumindest einem virtuellen Bedienelement zur Steuerung von Maschinenfunktionen des zumindest einen CNC-Bearbeitungszentrums anzeigt, und/oder
- einer virtuellen Darstellung von Betriebsparametern des zumindest einen CNC-Bearbeitungszentrums anzeigt, und/oder
- einer virtuellen Darstellung von Hilfestellungen zur Bedienung des zumindest einen CNC-Bearbeitungszentrums an.

In einer vorteilhaften Ausführung des Verfahrens erfasst die zumindest eine Bilderfassungseinrichtung Bilddaten zu von einem Benutzer durchgeführten Bewegungen, beispielsweise relativ zu einen CNC-Bearbeitungszentrum und/oder relativ zu einem angezeigten virtuellen Inhalt.

Die zumindest eine zum Erstellen von Extended-Reality-Inhalten konfigurierte Recheneinheit erkennt erfasste Benutzerbewegungen als Bedienbefehle zur Erstellung von Extended-Reality-Inhalten. Die zumindest eine zum Erstellen von Extended-Reality-Inhalten konfigurierte Recheneinheit kann in Abhängigkeit der Bedienbefehle auf das zumindest eine CNC-Bearbeitungszentrum bezogene virtuelle Inhalte erstellen und diese in ein Extended-Reality-kompatibles Format überführen. Eine entsprechende Anzeige kann gemeinsam mit den verarbeiteten Bilddaten der realen Umgebung des zumindest einen CNC-Bearbeitungszentrums erfolgen.

Alternativ oder in Kombination kann die zumindest eine zum Erstellen von Extended-Reality-Inhalten konfigurierte Recheneinheit erfasste Benutzerbewegungen als Steuerbefehle zur Steuerung von Maschinenfunktionen des zumindest einen CNC-Bearbeitungszentrums in den Bilddaten erkennen. Eine Steuereinrichtung zur Steuerung von Maschinenfunktionen des zumindest einen CNC-Bearbeitungszentrums kann die erkannten Steuerbefehle ausführen.

In einer vorteilhaften Ausführung des Verfahrens erfasst die zumindest eine Bilderfassungseinrichtung Bilddaten optoelektronisch lesbarer Codes, insbesondere QR-Codes, wobei die zumindest eine zum Erstellen von Extended-Reality-Inhalten konfigurierte Recheneinheit in den Bilddaten enthaltene codierte Daten dekodiert. Die zumindest eine zum Erstellen von Extended-Reality-Inhalten konfigurierte Recheneinheit erstellt auf die dekodierten Daten bezogene virtuelle Inhalte und führt diese zur Anzeige durch die die Extended-Reality-Anzeigevorrichtung in ein Extended-Reality-kompatibles Format über.

In einer vorteilhaften Ausführung des Verfahrens erfasst die zumindest eine Bilderfassungseinrichtung Bilddaten einer Anordnung und Konfiguration von funktional miteinander verbundener Baugruppen des zumindest einen CNC-Bearbeitungszentrums, beispielsweise von Bearbeitungswerkzeugen, und/oder Spannmitteln, und/oder Werkstückauflagen des zumindest einen CNC-Bearbeitungszentrums.

Die zumindest eine zum Erstellen von Extended-Reality-Inhalten konfigurierte Recheneinheit kann Abweichungen von einer Soll-Anordnung und/oder einer Soll-Konfiguration der funktional miteinander verbundenen Baugruppen erkennen, wobei die zumindest eine zum Erstellen von Extended-Reality-Inhalten konfigurierte Recheneinheit auf die Soll-Anordnung und/oder die Soll-Konfiguration der funktional miteinander verbundenen Baugruppen bezogene virtuelle Inhalte erstellen und diese zur Anzeige durch die die Extended-Reality-Anzeigevorrichtung in ein Extended-Reality-kompatibles Format überführen kann. Eine Anzeige kann gemeinsam mit den verarbeiteten Bilddaten der realen Umgebung des zumindest einen CNC-Bearbeitungszentrums erfolgen.

In einer vorteilhaften Ausführung des Verfahrens erfasst die zumindest eine Bilderfassungseinrichtung Bilddaten einer Lagervorrichtung für Bearbeitungswerkzeuge des zumindest einen CNC-Bearbeitungszentrums, wobei die zumindest eine zum Erstellen von Extended-Reality-Inhalten konfigurierte Recheneinheit Abweichungen von einer Soll-Bestückung der Lagervorrichtung mit Bearbeitungswerkzeugen erkennen kann.

Die zumindest eine zum Erstellen von Extended-Reality-Inhalten konfigurierte Recheneinheit kann auf die Soll-Bestückung der Lagervorrichtung mit Bearbeitungswerkzeugen bezogene virtuelle Inhalte erstellen und diese zur Anzeige durch die Extended-Reality-Anzeigevorrichtung in ein Extended-Reality-kompatibles Format überführen. Eine Anzeige kann gemeinsam mit den verarbeiteten Bilddaten der realen Umgebung des zumindest einen CNC-Bearbeitungszentrums erfolgen.

In einer vorteilhaften Ausführung des Verfahrens können der zumindest einen zum Erstellen von Extended-Reality-Inhalten konfigurierte Recheneinheit Daten zu auszuführenden Bearbeitungsabläufen des zumindest einen CNC-Bearbeitungszentrums zugeführt werden, beispielsweise aus einem Speicher ausgelesene Daten und/oder netzwerkbasiert bereitgestellte Daten.

Die zumindest eine zum Erstellen von Extended-Reality-Inhalten konfigurierte Recheneinheit kann auf die auszuführenden Bearbeitungsabläufe bezogene virtuelle Inhalte erstellen und diese zur Anzeige durch die Extended-Reality-Anzeigevorrichtung in ein Extended-Reality-kompatibles Format überführen. Eine Anzeige kann gemeinsam mit den verarbeiteten Bilddaten der realen Umgebung des zumindest einen CNC-Bearbeitungszentrums erfolgen.

Schutz wird auch begehrt für die Verwendung einer am Körper eines Nutzers tragbaren Extended-Reality-Anzeigevorrichtung in einer wie zuvor beschriebenen Anordnung zur Durchführung eines wie zuvor beschriebenen Verfahrens.

Ausführungsbeispiele der Erfindung werden anhand der Figuren diskutiert.
Figur 1 zeigt eine Anordnung mit einem CNC-Bearbeitungszentrum und einer Extended-Reality-Anzeigevorrichtung mit einer Darstellung der angezeigten Extended-Reality-Inhalte.
Figur 2 zeigt eine Anordnung mit einem CNC-Bearbeitungszentrum und einer Extended-Reality-Anzeigevorrichtung mit einer Darstellung einer Benutzerinteraktion mit angezeigten Extended-Reality-Inhalten.
Die Figuren 3 bis 6 zeigen jeweils eine Anordnung mit einem CNC-Bearbeitungszentrum und einer Extended-Reality-Anzeigevorrichtung mit Darstellungen unterschiedlicher angezeigter Extended-Reality-Inhalte.
Figur 7 zeigt schematisch eine Anordnung mit einem CNC-Bearbeitungszentrum und einer Extended-Reality-Anzeigevorrichtung.
Figur 8 zeigt schematisch einen Ablauf eines Verfahrens zur Anzeige von auf zumindest ein CNC-Bearbeitungszentrum bezogenen Extended-Reality-Inhalten.

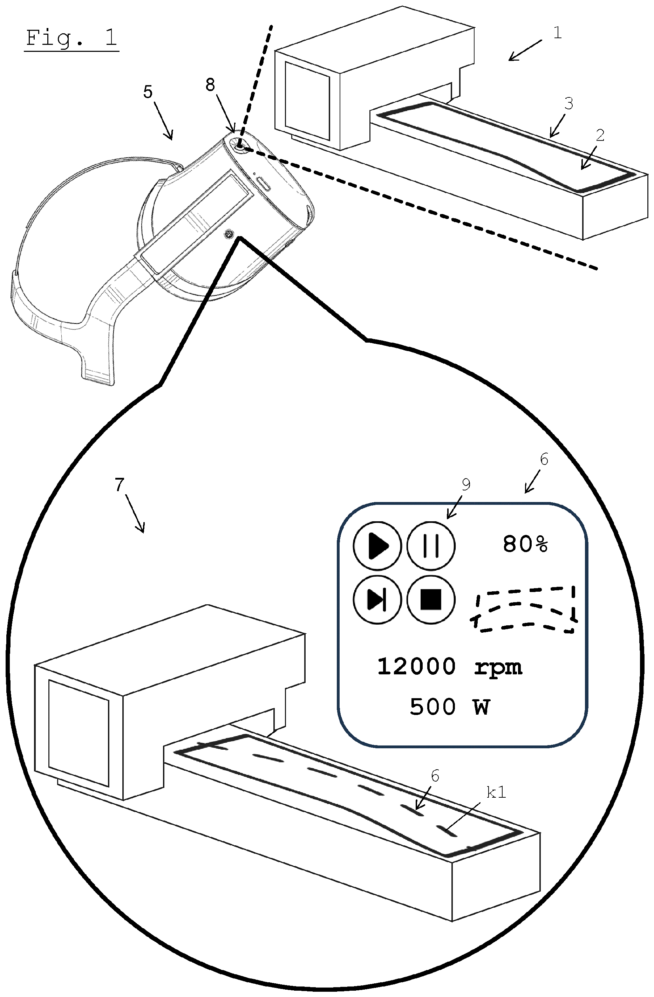

Figur 1 zeigt eine Anordnung umfassend zumindest ein CNC-Bearbeitungszentrum 1 zum Bearbeiten wenigstens eines auf einer Werkstückauflage 3 positionierten Werkstücks 2 und zumindest eine durch einen Benutzer tragbare Anzeigevorrichtung in Form einer Extended-Reality-Anzeigevorrichtung 5. Die Extended-Reality-Anzeigevorrichtung 5 weist eine Bilderfassungseinrichtung 8 auf, die in Echtzeit Bilddaten 7 einer realen Umgebung des zumindest einen CNC-Bearbeitungszentrums 1 erfasst. Einem Benutzer werden mit der Extended-Reality-Anzeigevorrichtung 5 sowohl auf das zumindest eine CNC-Bearbeitungszentrum 1 bezogene virtuelle Inhalte 6, als auch die verarbeiteten Bilddaten 7 der realen Umgebung des zumindest einen CNC-Bearbeitungszentrums 1 angezeigt.

In der in Figur 1 gezeigten Darstellung umfassen die auf das zumindest eine CNC-Bearbeitungszentrum 1 bezogenen virtuellen Inhalte 6 eine virtuelle Darstellung von Betriebsparametern des zumindest einen CNC-Bearbeitungszentrums 1, wie beispielsweise einer Drehzahl und einer Leistungsaufnahme eines Bearbeitungswerkzeugs, sowie einem Fortschritt eines Bearbeitungsvorgangs.

Die auf das zumindest eine CNC-Bearbeitungszentrum 1 bezogenen virtuellen Inhalte 6 umfassen in der in Figur 1 gezeigten Darstellung zusätzlich zumindest eine virtuelle Benutzerschnittstelle 9 mit zumindest einem virtuellen Bedienelement 25 zur Steuerung von Maschinenfunktionen des zumindest einen CNC-Bearbeitungszentrums 1.

In der in Figur 1 gezeigten Darstellung umfassen die auf das zumindest eine CNC-Bearbeitungszentrum 1 bezogenen virtuellen Inhalte 6 auch auf die auszuführenden Bearbeitungsabläufe bezogene virtuelle Inhalte 6, hier in Form einer Soll-Bearbeitungskontur k1 eines Bearbeitungsvorgangs. Solche virtuellen Inhalte 6 können aus Daten zu auszuführenden Bearbeitungsabläufen des zumindest einen CNC-Bearbeitungszentrums 1 erstellt werden und 4 gemeinsam mit den verarbeiteten Bilddaten 7 der realen Umgebung des zumindest einen CNC-Bearbeitungszentrums 1 angezeigt werden.

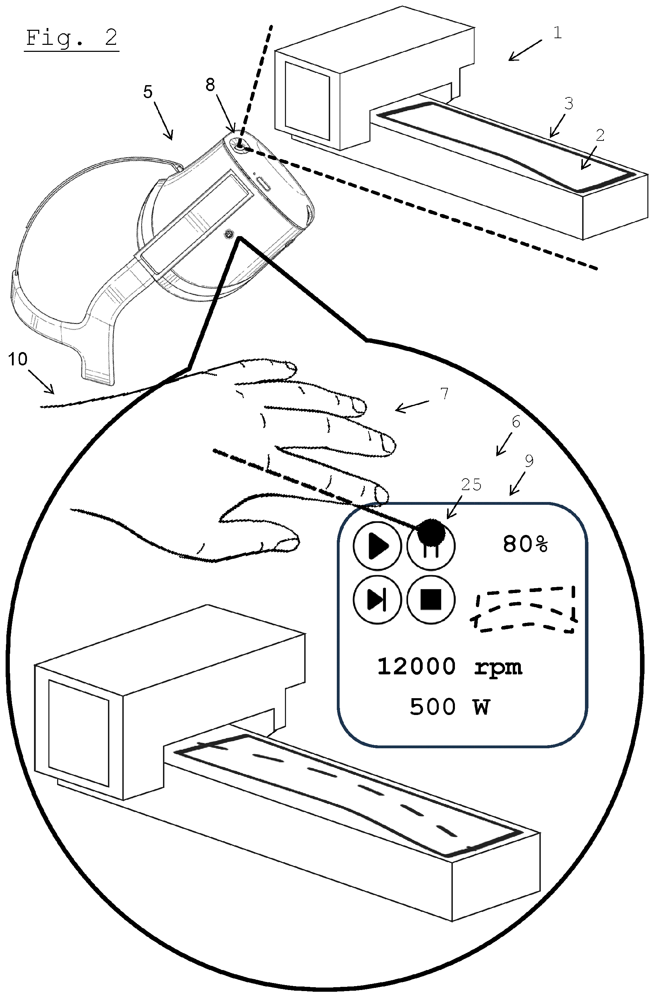

Figur 2 zeigt eine Darstellung einer Benutzerinteraktion mit angezeigten Extended-Reality-Inhalten, wobei mit der zumindest einen Bilderfassungseinrichtung 8 Bilddaten zu von einem Benutzer 10 durchgeführten Bewegungen erfassbar sind. Benutzerbewegungen können als Steuerbefehle zur Steuerung von Maschinenfunktionen des zumindest einen CNC-Bearbeitungszentrums 1 in den Bilddaten 7 erkannt werden, wie hier beispielsweise als Interaktion mit zumindest einem virtuellen Bedienelement 25 zur Steuerung von Maschinenfunktionen des zumindest einen CNC-Bearbeitungszentrums 1. Benutzerbewegungen können auch als Bedienbefehle zur Erstellung von Extended-Reality-Inhalten erkannt werden.

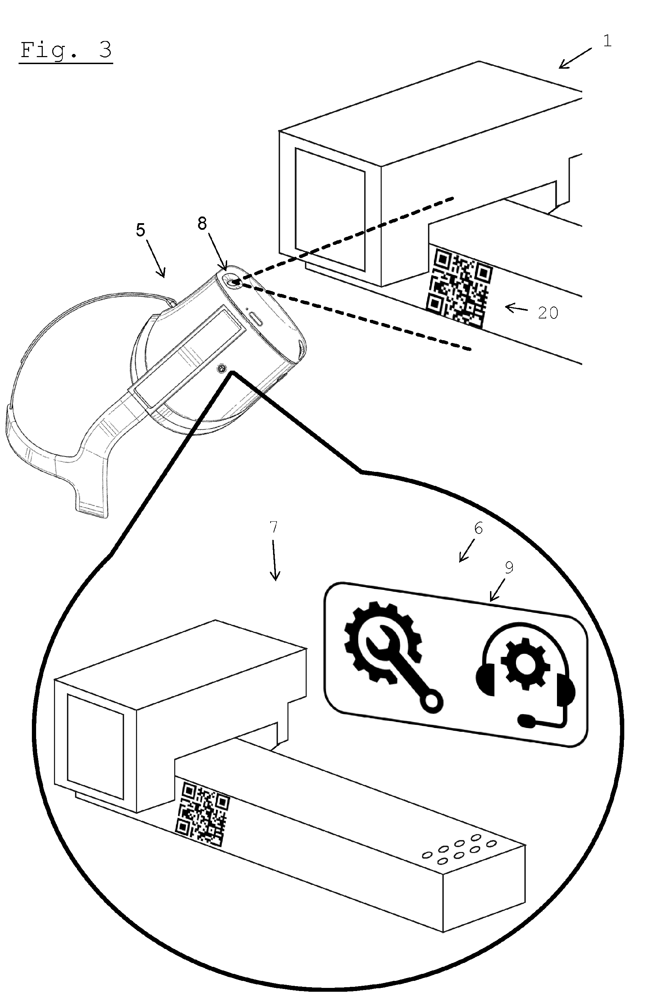

Figur 3 zeigt eine Anordnung mit einem CNC-Bearbeitungszentrum 1 und einer Extended-Reality-Anzeigevorrichtung 5 mit einer Darstellung von Hilfestellungen zur Bedienung des zumindest einen CNC-Bearbeitungszentrums 1. In der gezeigten Ausführung können mit der zumindest einen Bilderfassungseinrichtung 8 Bilddaten 7 eines optoelektronisch lesbaren Codes 20, hier insbesondere eines QR-Codes, erfassbar sein. Durch ein Dekodieren der in den Bilddaten 7 enthaltenen codierten Daten können auf die dekodierten Daten bezogene virtuelle Inhalte 6 erstellt werden, hier beispielsweise in Form einer Benutzerschnittstelle 9 mit auswählbaren digitalen Anleitungen und einer auswählbaren Fernunterstützung zur Reparatur und/oder Wartung des CNC-Bearbeitungszentrums 1.

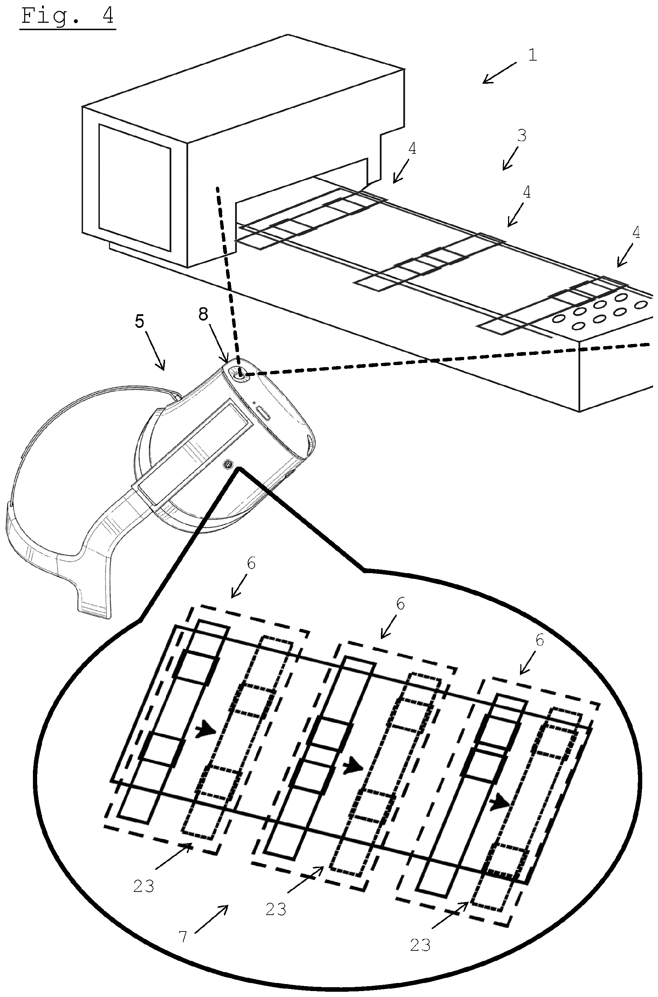

In Figur 4 ist dargestellt, wie mit virtuellen Inhalten 6 eine Anordnung und Konfiguration von funktional miteinander verbundener Baugruppen des zumindest einen CNC-Bearbeitungszentrums 1 unterstützt werden kann. Funktional miteinander verbundene Baugruppen können Bearbeitungswerkzeuge, und/oder Spannmittel 4, und/oder Werkstückauflagen 3 des zumindest einen CNC-Bearbeitungszentrums 1 umfassen.

Mit der zumindest einen Bilderfassungseinrichtung 8 können Bilddaten 7 einer Anordnung und Konfiguration von funktional miteinander verbundener Baugruppen des zumindest einen CNC-Bearbeitungszentrums 1 erfasst werden. In der Darstellung der Figur 4 können beispielsweise Positionen von verschiebbar entlang einer Werkstückauflage 3 gelagerten Spannmitteln 4 erfasst werden. Es kann eine Erkennung von Abweichungen von einer Soll-Anordnung und/oder einer Soll-Konfiguration der funktional miteinander verbundenen Baugruppen erfolgen und auf die Soll-Anordnung und/oder die Soll-Konfiguration der funktional miteinander verbundenen Baugruppen bezogene virtuelle Inhalte 6 erstellt werden. In der Darstellung der Figur 4 können solche virtuellen Inhalte 6 in Form von Konturen 23 der Sollposition der Spannmittel 4 gemeinsam mit den verarbeiteten Bilddaten 7 der realen Umgebung des zumindest einen CNC-Bearbeitungszentrums 1 angezeigt werden.

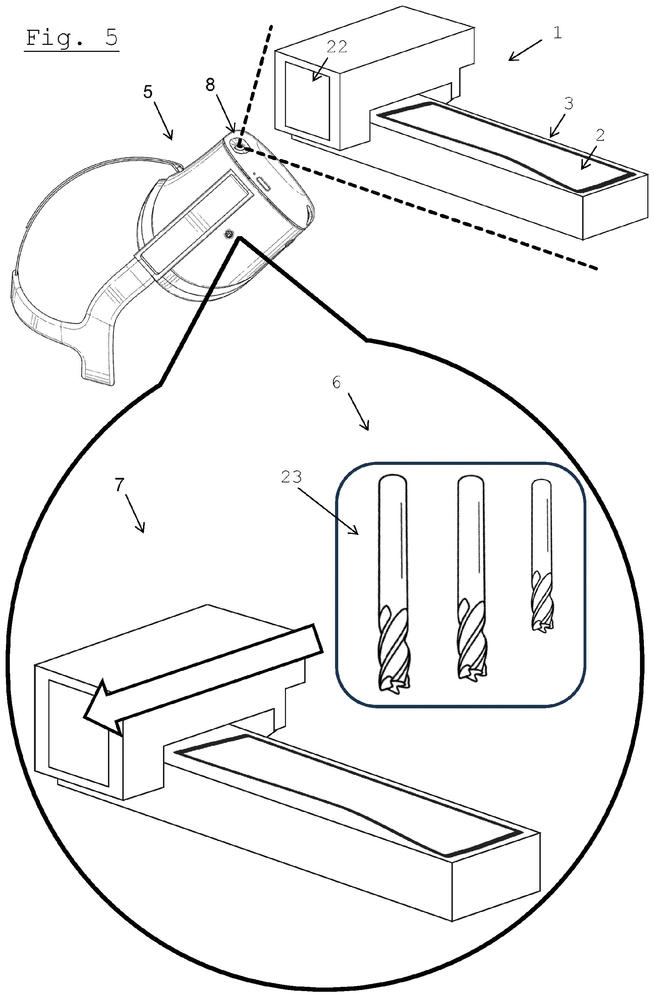

In Figur 5 ist dargestellt, wie mit virtuellen Inhalten 6 eine Bestückung einer Lagervorrichtung 22 für Bearbeitungswerkzeuge 23 des zumindest einen CNC-Bearbeitungszentrums 1 unterstützt werden kann. Dabei können der zumindest einen Bilderfassungseinrichtung 8 Bilddaten 7 einer Lagervorrichtung 22 für Bearbeitungswerkzeuge 23 des zumindest einen CNC-Bearbeitungszentrums 1 erfasst werden. Aus erkannten Abweichungen von einer vorgegebenen oder vorgebbaren Soll-Bestückung der Lagervorrichtung 22 mit Bearbeitungswerkzeugen 23 können auf die Soll-Bestückung der Lagervorrichtung 22 mit Bearbeitungswerkzeugen 22 bezogene virtuelle Inhalte 6, hier in Form von grafischen Repräsentationen der benötigten Bearbeitungswerkzeuge 22, erstellt und angezeigt werden.

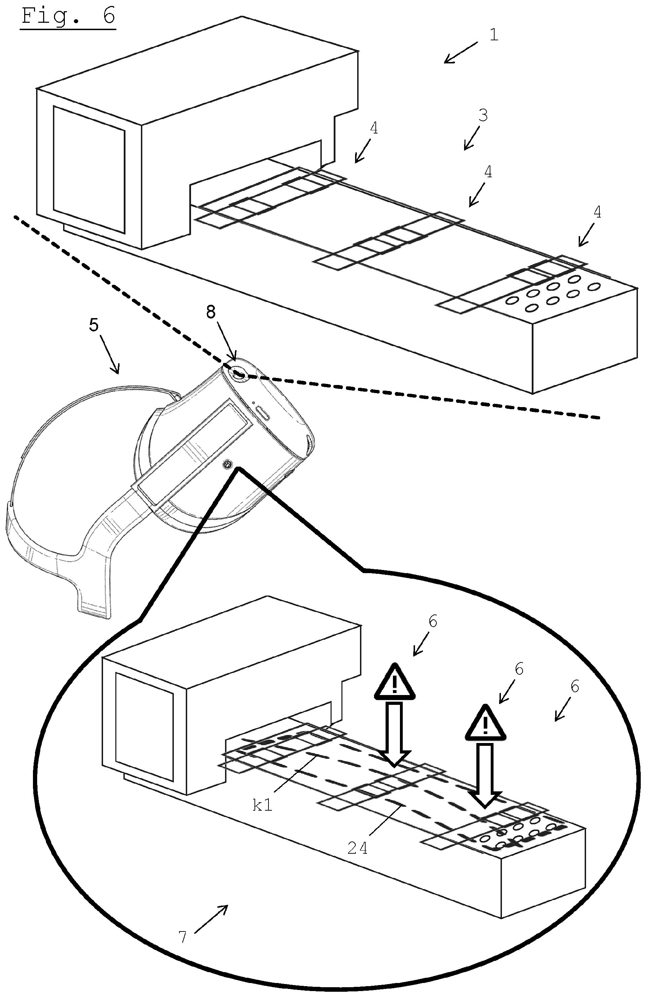

Figur 6 zeigt analog zu Figur 1 eine Darstellung von auf die auszuführenden Bearbeitungsabläufe bezogenen virtuellen Inhalten 6 in Form einer Soll-Bearbeitungskontur k1 eines Bearbeitungsvorgangs und einer Kontur 24 einer Sollposition des Werkstücks 2. Durch eine virtuelle Darstellung eines Pfades eines Bearbeitungswerkzeugs 23 des CNC-Bearbeitungszentrums 1 in Form der Soll-Bearbeitungskontur k1 können sich Bearbeitungsabläufe virtuell simulieren lassen und eine Kollision eines Bearbeitungswerkzeugs 23 mit einem Teil des CNC-Bearbeitungszentrums 1, etwa einem Spannmittel 4 ausgeschlossen werden. Durch eine Kollisionserkennung können auf etwaige Kollisionen bezogene virtuelle Inhalte 6 erstellt und gemeinsam mit den verarbeiteten Bilddaten 7 der realen Umgebung des zumindest einen CNC-Bearbeitungszentrums 1 angezeigt werden.

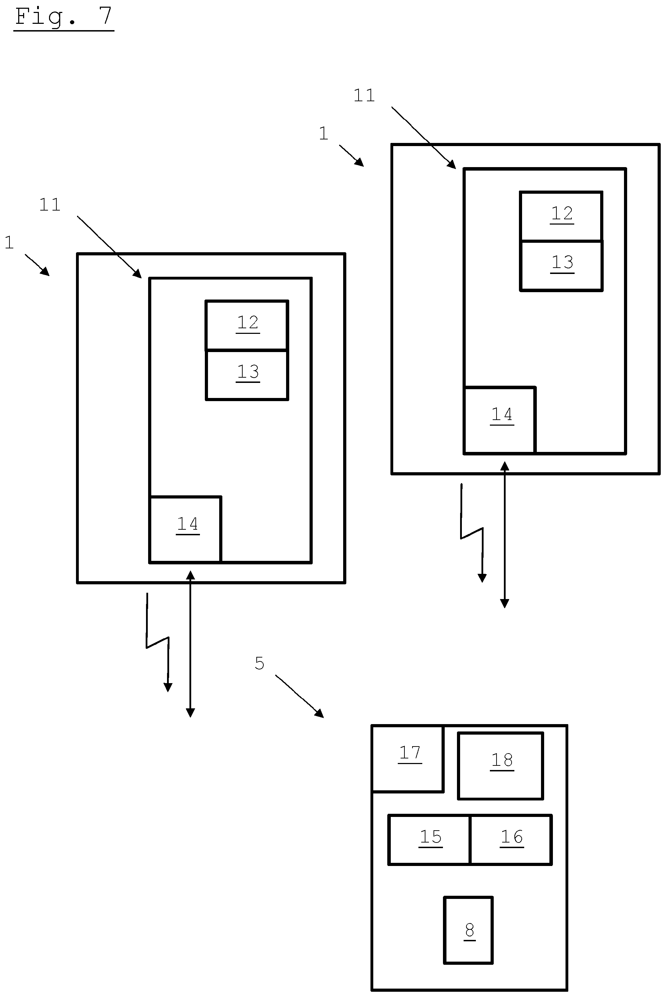

Figur 7 zeigt schematisch eine exemplarische Anordnung mit zwei CNC-Bearbeitungszentren 1 und einer Extended-Reality-Anzeigevorrichtung 5. Anordnungen mit mehreren CNC-Bearbeitungszentren 1 und mehreren Extended-Reality-Anzeigevorrichtungen 5 sind ebenso denkbar.

Vorteilhaft weist zumindest ein CNC-Bearbeitungszentrum 1 eine Steuereinrichtung 11 zur Steuerung von Maschinenfunktionen des zumindest einen CNC-Bearbeitungszentrums 1 mit Steuerbefehlen auf, wobei diese Steuereinrichtung 11 wenigstens eine Recheneinheit 12 und wenigstens eine Speichereinheit 13 aufweisen kann. Die Recheneinheit 12 kann mit der Speichereinheit 13 in einer Datenverbindung stehen oder in eine solche bringbar sein. Die Steuereinrichtung 11 kann eine Kommunikationseinrichtung 14 zur drahtlosen und/oder kabelgebundenen Kommunikation mit dem CNC-Bearbeitungszentrum 1, und/oder der zum Erstellen von Extended-Reality-Inhalten konfigurierten Recheneinheit 15, und/oder der Extended-Reality-Anzeigevorrichtung 5 aufweisen.

Die wenigstens eine Extended-Reality-Anzeigevorrichtung 5 kann eine Recheneinheit 15 und eine mit dieser in einer Datenverbindung stehende oder in eine solche bringbare Speichereinheit 16 aufweisen.

Die zumindest eine zum Erstellen von Extended-Reality-Inhalten konfigurierte Recheneinheit 15 kann als ein gesonderter Rechner ausgeführt sein, als eine Recheneinheit des CNC-Bearbeitungszentrums 1 ausgeführt sein, oder wie exemplarisch dargestellt als eine Recheneinheit 15 der Extended-Reality-Anzeigevorrichtung 5 ausgeführt sein.

Die wenigstens eine Extended-Reality-Anzeigevorrichtung 5 kann eine Kommunikationseinrichtung 17 zur drahtlosen und/oder kabelgebundenen Kommunikation mit dem CNC-Bearbeitungszentrum 1 und/oder einem Rechner aufweisen.

Die zumindest eine zum Erstellen von Extended-Reality-Inhalten konfigurierte Recheneinheit 15 erstellt auf das zumindest eine CNC-Bearbeitungszentrum 1 bezogene virtuelle Inhalte 6 und führt diese in ein Extended-Reality-kompatibles Format über.

Die zumindest eine zum Erstellen von Extended-Reality-Inhalten konfigurierte Recheneinheit 15 verarbeitet die von der zumindest einen Bilderfassungseinrichtung 8 erfassten Bilddaten 7 und führt diese in ein Extended-Reality-kompatibles Format über.

Die zumindest eine Bilderfassungseinrichtung 8 kann als eine Kamera ausgebildet sein, die in Echtzeit Bilddaten 7 einer realen Umgebung des zumindest einen CNC-Bearbeitungszentrums 1 erfasst.

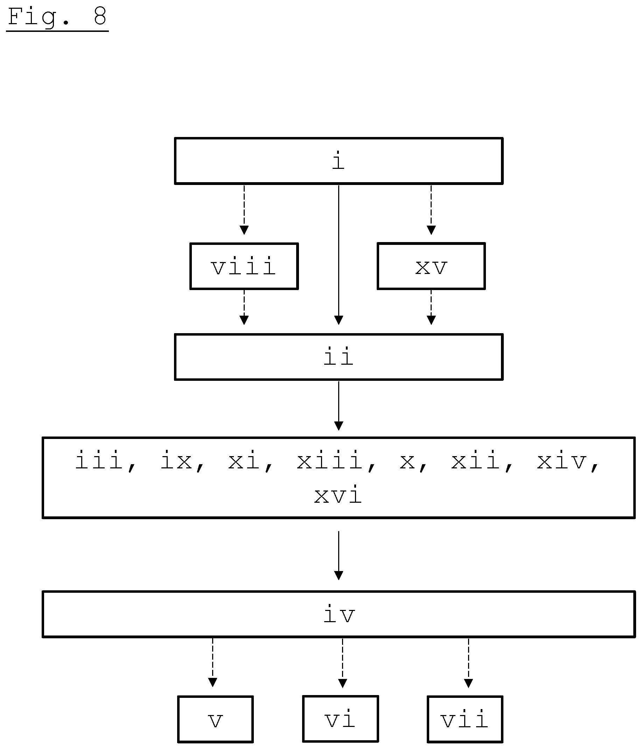

In Figur 8 ist schematisch der Ablauf unterschiedlicher Ausführungen eines Verfahrens zur Anzeige von auf zumindest ein CNC-Bearbeitungszentrum 1 bezogenen Extended-Reality-Inhalten durch eine Extended-Reality-Anzeigevorrichtung 5 gezeigt. Unterschiedliche Ausführungen des Verfahrens können zumindest teilweise sequentiell und/oder parallel erfolgen.

Dabei kann zumindest eine Bilderfassungseinrichtung 8 in Echtzeit Bilddaten einer realen Umgebung des zumindest einen CNC-Bearbeitungszentrums 1 erfassen (i). Zumindest eine zum Erstellen von Extended-Reality-Inhalten konfigurierte Recheneinheit 15 kann die von der zumindest einen Bilderfassungseinrichtung 8 erfassten Bilddaten 7 verarbeiten und in ein Extended-Reality-kompatibles Format überführen (ii). Zumindest eine zum Erstellen von Extended-Reality-Inhalten konfigurierte Recheneinheit 15 kann auf das zumindest eine CNC-Bearbeitungszentrum 1 bezogene virtuelle Inhalte 6 erstellen und in ein Extended-Reality-kompatibles Format überführen (iii). Die Extended-Reality-Anzeigevorrichtung 5 kann sowohl die auf das zumindest eine CNC-Bearbeitungszentrum 1 bezogenen virtuellen Inhalte 6, als auch die verarbeiteten Bilddaten 7 der realen Umgebung des zumindest einen CNC-Bearbeitungszentrums 1 anzeigen (iv) .

Als auf das zumindest eine CNC-Bearbeitungszentrum 1 bezogene virtuelle Inhalte 6 können grundsätzlich sämtliche Inhalte verstanden werden, die zusätzlich zu von einer Bilderfassungseinrichtung 8 erfassten Bilddaten 7 gegeben sind.

In einer Ausführung des Verfahrens kann die Extended-Reality-Anzeigevorrichtung 5 auf das zumindest eine CNC-Bearbeitungszentrum 1 bezogene virtuelle Inhalte 6 in Form
- zumindest einer virtuellen Benutzerschnittstelle 9 mit zumindest einem virtuellen Bedienelement 25 zur Steuerung von Maschinenfunktionen des zumindest einen CNC-Bearbeitungszentrums 1 anzeigen (v), und/oder
- einer virtuellen Darstellung von Betriebsparametern des zumindest einen CNC-Bearbeitungszentrums 1 anzeigen (vi), und/oder
- einer virtuellen Darstellung von Hilfestellungen zur Bedienung des zumindest einen CNC-Bearbeitungszentrums 1 anzeigen (vii).

In einer Ausführung des Verfahrens kann die zumindest eine Bilderfassungseinrichtung 8 Bilddaten 7 zu von einem Benutzer 10 durchgeführten Bewegungen erfassen (i) und die zumindest eine zum Erstellen von Extended-Reality-Inhalten konfigurierte Recheneinheit 15 erfasste Benutzerbewegungen als Bedienbefehle zur Erstellung von Extended-Reality-Inhalten und/oder als Steuerbefehle zur Steuerung von Maschinenfunktionen des zumindest einen CNC-Bearbeitungszentrums 1 in den Bilddaten erkennen (viii). Eine Anzeige kann gemeinsam mit den verarbeiteten Bilddaten 7 der realen Umgebung des zumindest einen CNC-Bearbeitungszentrums 1 erfolgen (iv).

In einer Ausführung des Verfahrens kann die zumindest eine Bilderfassungseinrichtung 8 Bilddaten 7 optoelektronisch lesbarer Codes 20, insbesondere QR-Codes, erfassen (i), die zumindest eine zum Erstellen von Extended-Reality-Inhalten konfigurierte Recheneinheit 15 in den Bilddaten 7 enthaltene codierte Daten dekodieren (ix), und die zumindest eine zum Erstellen von Extended-Reality-Inhalten konfigurierte Recheneinheit 15 auf die dekodierten Daten bezogene virtuelle Inhalte 6 erstellen und zur Anzeige durch die Extended-Reality-Anzeigevorrichtung 5 in ein Extended-Reality-kompatibles Format überführen (x). Eine Anzeige kann gemeinsam mit den verarbeiteten Bilddaten 7 der realen Umgebung des zumindest einen CNC-Bearbeitungszentrums 1 erfolgen (iv).

In einer Ausführung des Verfahrens kann die zumindest eine Bilderfassungseinrichtung 8 Bilddaten 7 einer Anordnung und Konfiguration von funktional miteinander verbundener Baugruppen des zumindest einen CNC-Bearbeitungszentrums 1 erfassen (i), die zumindest eine zum Erstellen von Extended-Reality-Inhalten konfigurierte Recheneinheit 15 Abweichungen von einer Soll-Anordnung und/oder einer Soll-Konfiguration der funktional miteinander verbundenen Baugruppen erkennen (xi), und die zumindest eine zum Erstellen von Extended-Reality-Inhalten konfigurierte Recheneinheit 15 auf die Soll-Anordnung und/oder die Soll-Konfiguration der funktional miteinander verbundenen Baugruppen bezogene virtuelle Inhalte 6 erstellen und zur Anzeige durch die die Extended-Reality-Anzeigevorrichtung 5 in ein Extended-Reality-kompatibles Format überführen (xii). Eine Anzeige kann gemeinsam mit den verarbeiteten Bilddaten 7 der realen Umgebung des zumindest einen CNC-Bearbeitungszentrums 1 erfolgen (iv).

In einer Ausführung des Verfahrens kann die zumindest eine Bilderfassungseinrichtung 8 Bilddaten 7 einer Lagervorrichtung 22 für Bearbeitungswerkzeuge 23 des zumindest einen CNC-Bearbeitungszentrums 1 erfassen (i), die zumindest eine zum Erstellen von Extended-Reality-Inhalten konfigurierte Recheneinheit 15 Abweichungen von einer Soll-Bestückung der Lagervorrichtung mit Bearbeitungswerkzeugen erkennen (xiii), und die zumindest eine zum Erstellen von Extended-Reality-Inhalten konfigurierte Recheneinheit 15 auf die Soll-Bestückung der Lagervorrichtung 22 mit Bearbeitungswerkzeugen 23 bezogene virtuelle Inhalte 6 erstellt und zur Anzeige durch die Extended-Reality-Anzeigevorrichtung 5 in ein Extended-Reality-kompatibles Format überführen (xiv). Eine Anzeige kann gemeinsam mit den verarbeiteten Bilddaten 7 der realen Umgebung des zumindest einen CNC-Bearbeitungszentrums 1 erfolgen (iv).

In einer Ausführung des Verfahrens können der zumindest einen zum Erstellen von Extended-Reality-Inhalten konfigurierte Recheneinheit 15 Daten zu auszuführenden Bearbeitungsabläufen des zumindest einen CNC-Bearbeitungszentrums 1 zugeführt werden (xv) und die zumindest eine zum Erstellen von Extended-Reality-Inhalten konfigurierte Recheneinheit 15 auf die auszuführenden Bearbeitungsabläufe bezogene virtuelle Inhalte 6 erstellen und zur Anzeige durch die Extended-Reality-Anzeigevorrichtung 5 in ein Extended-Reality-kompatibles Format überführen (xvi). Eine Anzeige kann gemeinsam mit den verarbeiteten Bilddaten 7 der realen Umgebung des zumindest einen CNC-Bearbeitungszentrums 1 erfolgen (iv).

### Bezugszeichenliste

- 1: CNC-Bearbeitungszentrum
- 2: Werkstück
- 3: Werkstückauflage
- 4: Spannmittel
- 5: Extended-Reality-Anzeigevorrichtung
- 6: virtuelle Inhalte
- 7: Bilddaten realer Umgebung
- 8: Bilderfassungseinrichtung
- 9: Benutzerschnittstelle
- 10: Benutzer
- 11: Steuereinrichtung
- 12: Recheneinheit Steuereinrichtung
- 13: Speichereinheit Steuereinrichtung
- 14: Kommunikationseinrichtung Steuereinrichtung
- 15: Recheneinheit Extended-Reality-Anzeigevorrichtung
- 16: Speichereinheit Extended-Reality-Anzeigevorrichtung
- 17: Kommunikationseinrichtung Extended-Reality-Anzeigevorrichtung
- 18: Energiespeicher
- 20: optoelektronisch lesbarer Code
- 21: Kontur Sollposition Spannmittel
- 22: Lagervorrichtung
- 23: Bearbeitungswerkzeug
- 24: Kontur Sollposition Werkstück
- 25: virtuelles Bedienelement

- i bis xvi: Teile im Verfahren

- k1: Soll-Bearbeitungskontur

## Patentansprüche

1. Anordnung umfassend
- zumindest ein CNC-Bearbeitungszentrum (1) zum, insbesondere spanabhebenden, Bearbeiten wenigstens eines, insbesondere plattenförmigen, Werkstücks (2), insbesondere aus Holz oder aus wenigstens einem Holzaustauschstoff,
- zumindest eine durch einen Benutzer tragbare Anzeigevorrichtung,
wobei die zumindest eine durch einen Benutzer tragbare Anzeigevorrichtung als Extended-Reality-Anzeigevorrichtung (5) ausgebildet ist, wobei die Anordnung weiter
- zumindest eine Bilderfassungseinrichtung (8), die in Echtzeit Bilddaten (7) einer realen Umgebung des zumindest einen CNC-Bearbeitungszentrums (1) erfasst, und
- zumindest eine zum Erstellen von Extended-Reality-Inhalten konfigurierte Recheneinheit (15) umfasst,
wobei die zumindest eine zum Erstellen von Extended-Reality-Inhalten konfigurierte Recheneinheit (15) auf das zumindest eine CNC-Bearbeitungszentrum (1) bezogene virtuelle Inhalte (6) erstellt und in ein Extended-Reality-kompatibles Format überführt,
wobei die zumindest eine zum Erstellen von Extended-Reality-Inhalten konfigurierte Recheneinheit (15) die von der zumindest einen Bilderfassungseinrichtung (8) erfassten Bilddaten (7) verarbeitet und in ein Extended-Reality-kompatibles Format überführt,
wobei die Extended-Reality-Anzeigevorrichtung (5) sowohl die auf das zumindest eine CNC-Bearbeitungszentrum (1) bezogenen virtuellen Inhalte (6), als auch die verarbeiteten Bilddaten (7) der realen Umgebung des zumindest einen CNC-Bearbeitungszentrums (1) anzeigt.

2. Anordnung nach dem vorangehenden Anspruch, wobei mit der zumindest einen Bilderfassungseinrichtung (8) Bilddaten (7) zu von einem Benutzer (10) durchgeführten Bewegungen erfassbar sind, wobei die zumindest eine zum Erstellen von Extended-Reality-Inhalten konfigurierte Recheneinheit (15) zur Erkennung von Benutzerbewegungen als Bedienbefehle zur Erstellung von Extended-Reality-Inhalten und/oder als Steuerbefehle zur Steuerung von Maschinenfunktionen des zumindest einen CNC-Bearbeitungszentrums (1) in den Bilddaten (7) konfiguriert ist.

3. Anordnung nach einem der vorangehenden Ansprüche, wobei die auf das CNC-Bearbeitungszentrum (1) bezogenen virtuellen Inhalte
- zumindest eine virtuelle Benutzerschnittstelle (9) mit zumindest einem virtuellen Bedienelement (25) zur Steuerung von Maschinenfunktionen des zumindest einen CNC-Bearbeitungszentrums (1) umfassen, und/oder
- eine virtuelle Darstellung von Betriebsparametern des zumindest einen CNC-Bearbeitungszentrums (1) umfassen, und/oder
- eine virtuelle Darstellung von Hilfestellungen zur Bedienung des zumindest einen CNC-Bearbeitungszentrums (1) umfassen.

4. Anordnung nach einem der vorangehenden Ansprüche, wobei mit der zumindest einen Bilderfassungseinrichtung (8) Bilddaten (7) optoelektronisch lesbarer Codes (20), insbesondere QR-Codes, erfassbar sind, wobei die zumindest eine zum Erstellen von Extended-Reality-Inhalten konfigurierte Recheneinheit (15) zum Dekodieren der in den Bilddaten (7) enthaltenen codierten Daten konfiguriert ist, wobei die zumindest eine zum Erstellen von Extended-Reality-Inhalten konfigurierte Recheneinheit (15) auf die dekodierten Daten bezogene virtuelle Inhalte (6) erstellt und zur Anzeige durch die Extended-Reality-Anzeigevorrichtung (5) in ein Extended-Reality-kompatibles Format überführt.

5. Anordnung nach einem der vorangehenden Ansprüche, wobei mit der zumindest einen Bilderfassungseinrichtung (8) Bilddaten (7) einer Anordnung und Konfiguration von funktional miteinander verbundener Baugruppen (4) des zumindest einen CNC-Bearbeitungszentrums (1) erfassbar sind, wobei die zumindest eine zum Erstellen von Extended-Reality-Inhalten konfigurierte Recheneinheit (15) zur Erkennung von Abweichungen von einer Soll-Anordnung und/oder einer Soll-Konfiguration der funktional miteinander verbundenen Baugruppen (4) konfiguriert ist, wobei die zumindest eine zum Erstellen von Extended-Reality-Inhalten konfigurierte Recheneinheit (15) auf die Soll-Anordnung und/oder die Soll-Konfiguration der funktional miteinander verbundenen Baugruppen (4) bezogene virtuelle Inhalte (6) erstellt und zur Anzeige durch die Extended-Reality-Anzeigevorrichtung (5) in ein Extended-Reality-kompatibles Format überführt.

6. Anordnung nach einem der vorangehenden Ansprüche, wobei mit der zumindest einen Bilderfassungseinrichtung (8) Bilddaten (7) einer Lagervorrichtung für Bearbeitungswerkzeuge des zumindest einen CNC-Bearbeitungszentrums (1) erfassbar sind, wobei die zumindest eine zum Erstellen von Extended-Reality-Inhalten konfigurierte Recheneinheit (15) zur Erkennung von Abweichungen von einer Soll-Bestückung der Lagervorrichtung (22) mit Bearbeitungswerkzeugen (23) konfiguriert ist, wobei die zumindest eine zum Erstellen von Extended-Reality-Inhalten konfigurierte Recheneinheit (15) auf die Soll-Bestückung der Lagervorrichtung (22) mit Bearbeitungswerkzeugen (23) bezogene virtuelle Inhalte (6) erstellt und zur Anzeige durch die Extended-Reality-Anzeigevorrichtung (5) in ein Extended-Reality-kompatibles Format überführt.

7. Anordnung nach einem der vorangehenden Ansprüche, wobei der zumindest einen zum Erstellen von Extended-Reality-Inhalten konfigurierte Recheneinheit (15) Daten zu auszuführenden Bearbeitungsabläufen des zumindest einen CNC-Bearbeitungszentrums (1) zuführbar sind, wobei die zumindest eine zum Erstellen von Extended-Reality-Inhalten konfigurierte Recheneinheit (15) auf die auszuführenden Bearbeitungsabläufe bezogene virtuelle Inhalte (6) erstellt und zur Anzeige durch die Extended-Reality-Anzeigevorrichtung (5) in ein Extended-Reality-kompatibles Format überführt.

8. Verfahren zur Anzeige von auf zumindest ein CNC-Bearbeitungszentrum (1) bezogenen Extended-Reality-Inhalten durch eine Extended-Reality-Anzeigevorrichtung (5), wobei
- zumindest eine Bilderfassungseinrichtung (8) in Echtzeit Bilddaten (7) einer realen Umgebung des zumindest einen CNC-Bearbeitungszentrums (1) erfasst (i),
- zumindest eine zum Erstellen von Extended-Reality-Inhalten konfigurierte Recheneinheit (15) die von der zumindest einen Bilderfassungseinrichtung (8) erfassten Bilddaten (7) verarbeitet und in ein Extended-Reality-kompatibles Format überführt (ii),
- zumindest eine zum Erstellen von Extended-Reality-Inhalten konfigurierte Recheneinheit (15) auf das zumindest eine CNC-Bearbeitungszentrum (1) bezogene virtuelle Inhalte (6) erstellt und in ein Extended-Reality-kompatibles Format überführt (iii),
- die Extended-Reality-Anzeigevorrichtung (5) sowohl die auf das zumindest eine CNC-Bearbeitungszentrum (1) bezogenen virtuellen Inhalte (6), als auch die verarbeiteten Bilddaten (7) der realen Umgebung des zumindest einen CNC-Bearbeitungszentrums (1) anzeigt (iv).

9. Verfahren nach dem vorangehenden Anspruch, wobei die Extended-Reality-Anzeigevorrichtung (5) auf das zumindest eine CNC-Bearbeitungszentrum (1) bezogene virtuelle Inhalte in Form
- zumindest einer virtuellen Benutzerschnittstelle (9) mit zumindest einem virtuellen Bedienelement (25) zur Steuerung von Maschinenfunktionen des zumindest einen CNC-Bearbeitungszentrums (1) anzeigt, und/oder
- einer virtuellen Darstellung von Betriebsparametern des zumindest einen CNC-Bearbeitungszentrums (1) anzeigt, und/oder
- einer virtuellen Darstellung von Hilfestellungen zur Bedienung des zumindest einen CNC-Bearbeitungszentrums (1) anzeigt.

10. Verfahren nach einem der beiden vorangehenden Ansprüche, wobei
- die zumindest eine Bilderfassungseinrichtung (8) Bilddaten (7) zu von einem Benutzer (10) durchgeführten Bewegungen erfasst,
- die zumindest eine zum Erstellen von Extended-Reality-Inhalten konfigurierte Recheneinheit (15) erfasste Benutzerbewegungen als Bedienbefehle zur Erstellung von Extended-Reality-Inhalten und/oder als Steuerbefehle zur Steuerung von Maschinenfunktionen des zumindest einen CNC-Bearbeitungszentrums (1) in den Bilddaten (7) erkennt.

11. Verfahren nach einem der Ansprüche 8 bis 10, wobei
- die zumindest eine Bilderfassungseinrichtung (8) Bilddaten (7) optoelektronisch lesbarer Codes (20), insbesondere QR-Codes, erfasst,
- die zumindest eine zum Erstellen von Extended-Reality-Inhalten konfigurierte Recheneinheit (15) in den Bilddaten (7) enthaltene codierte Daten dekodiert,
- die zumindest eine zum Erstellen von Extended-Reality-Inhalten konfigurierte Recheneinheit (15) auf die dekodierten Daten bezogene virtuelle Inhalte (6) erstellt und zur Anzeige durch die Extended-Reality-Anzeigevorrichtung (5) in ein Extended-Reality-kompatibles Format überführt.

12. Verfahren nach einem der Ansprüche 8 bis 11, wobei
- die zumindest eine Bilderfassungseinrichtung (8) Bilddaten (7) einer Anordnung und Konfiguration von funktional miteinander verbundener Baugruppen (3) des zumindest einen CNC-Bearbeitungszentrums (1) erfasst,
- die zumindest eine zum Erstellen von Extended-Reality-Inhalten konfigurierte Recheneinheit (15) Abweichungen von einer Soll-Anordnung und/oder einer Soll-Konfiguration der funktional miteinander verbundenen Baugruppen (3) erkennt,
- die zumindest eine zum Erstellen von Extended-Reality-Inhalten konfigurierte Recheneinheit (15) auf die Soll-Anordnung und/oder die Soll-Konfiguration der funktional miteinander verbundenen Baugruppen (3) bezogene virtuelle Inhalte (6) erstellt und zur Anzeige durch die Extended-Reality-Anzeigevorrichtung (5) in ein Extended-Reality-kompatibles Format überführt.

13. Verfahren nach einem der Ansprüche 8 bis 12, wobei
- die zumindest eine Bilderfassungseinrichtung (8) Bilddaten (7) einer Lagervorrichtung (22) für Bearbeitungswerkzeuge (23) des zumindest einen CNC-Bearbeitungszentrums (1) erfasst,
- die zumindest eine zum Erstellen von Extended-Reality-Inhalten konfigurierte Recheneinheit (15) Abweichungen von einer Soll-Bestückung der Lagervorrichtung (22) mit Bearbeitungswerkzeugen (23) erkennt,
- die zumindest eine zum Erstellen von Extended-Reality-Inhalten konfigurierte Recheneinheit (15) auf die Soll-Bestückung der Lagervorrichtung (22) mit Bearbeitungswerkzeugen (23) bezogene virtuelle Inhalte (6) erstellt und zur Anzeige durch die Extended-Reality-Anzeigevorrichtung (5) in ein Extended-Reality-kompatibles Format überführt.

14. Verfahren nach einem der Ansprüche 8 bis 13, wobei
- der zumindest einen zum Erstellen von Extended-Reality-Inhalten konfigurierte Recheneinheit (15) Daten zu auszuführenden Bearbeitungsabläufen des zumindest einen CNC-Bearbeitungszentrums (1) zugeführt werden,
- die zumindest eine zum Erstellen von Extended-Reality-Inhalten konfigurierte Recheneinheit (15) auf die auszuführenden Bearbeitungsabläufe bezogene virtuelle Inhalte (6) erstellt und zur Anzeige durch die Extended-Reality-Anzeigevorrichtung (5) in ein Extended-Reality-kompatibles Format überführt.

15. Verwendung einer am Körper eines Nutzers (6) tragbaren Extended-Reality-Anzeigevorrichtung (5) in einer Anordnung nach einem der Ansprüche 1 bis 7 zur Durchführung eines Verfahrens nach einem der Ansprüche 8 bis 14.
